# EUROPÄISCHE PATENTSCHRIFT

(11) **EP 0 498 864 B1**
(45) Veröffentlichungstag und Bekanntmachung des Hinweises auf die Patenterteilung: **20.12.1995**
(21) Anmeldenummer: 91914529.2
(22) Anmeldetag: 29.08.1991
(51) Int. Cl.: F16H 3/00, B60K 41/22

(54) **DOPPELKUPPLUNG-GANGWECHSELGETRIEBE FÜR KRAFTFAHRZEUGE**
DOUBLE CLUTCH GEAR-CHANGE FOR MOTOR VEHICLES
BOITE DE CHANGEMENT DE VITESSES A DOUBLE EMBRAYAGE POUR VEHICULES A MOTEUR

(30) Priorität: 05.09.1990 CH 2873/90
(43) Veröffentlichungstag der Anmeldung: 19.08.1992
(73) Patentinhaber: BALASS, Valentin, CH-8038 Zürich (CH)
(72) Erfinder: BALASS, Valentin, CH-8038 Zürich (CH)
(74) Vertreter: Patentanwälte Schaad, Balass, Menzl & Partner AG
(86) Internationale Anmeldenummer: CH9100185
(87) Internationale Veröffentlichungsnummer: WO9204558

(56) Entgegenhaltungen:
- EP-A- 0 088 486
- EP-A- 0 130 130
- FR-A- 1 562 903
- FR-A- 2 180 388
- GB-A- 2 057 607
- US-A- 4 727 472
- US-A- 4 860 607

## Beschreibung

Die Erfindung betrifft ein Doppelkupplung-Gangwechselgetriebe für Kraftfahrzeuge nach dem Oberbegriff des Anspruches 1.

Ein Kraftfahrzeuggetriebe dieser Art ist in der EP-A2 0144737 beschrieben. Der Antrieb zum Getriebe ist in zwei koaxiale Wellen aufgeteilt, wobei jede Welle mit einer Kupplung verbunden ist. Die Gänge 1, 3 und 5 sind der einen Welle, die Gänge 2,4 und der Rückwärtsgang der anderen Welle bzw. Kupplung zugeordnet. Durch Betätigen der entsprechenden Kupplung kann jeweils von einem Gang der einen Welle ohne Zugkraftunterbrechung auf einen Gang der anderen Welle geschaltet werden.

Daraus freilich ergibt sich die Beschränkung, dass die Gänge nicht beliebig frei hintereinander wählbar sind. So kann z.B. aus dem 5.Gang zwar direkt in den 4. und 2., nicht aber in den 3.Gang zurückgeschaltet werden. Sinngemäss gilt dies für alle anderen Gänge, und zwar auch beim Hochschalten. Hierbei besitzt das bekannte Getriebe eine aufwendige elektrohydraulische Steuerung, die mit einem Gangwählhebel in Verbindung steht und neben den Kupplungen auch die Gangschaltbetätigung nach einem vorgegebenen Programm steuert.

Demgegenüber ist bei dem aus der EP-A-88486 bekannten Doppelkupplung-Gangwechselgetriebe das Abtriebsglied des Getriebes mit der höchsten (also niedrigstes Uebersetzungsverhältnis aufweisenden) Gangstufe verbunden, die (auch) als Synchronisiergang benutzt wird, um die übrigen Gangstufen mit einer vollautomatischen Steuerung bzw. Betätigung beliebig schalten zu können. Dabei geht es darum, die Wirkungsweise zu erzielen, die einer üblichen Kombination eines hydrodynamischen Drehmomentwandlers mit einem Planetensatz eigen ist.

Der Erfindung liegt die Aufgabe zugrunde, bei einem derartigen, unter Last schaltbaren Getriebe die Freizügigkeit beim Gangwechsel zu steigern, zugleich aber den diesbezüglich erforderlichen Aufwand zu verringern und zu vereinfachen.

Gelöst wird die Aufgabe durch die kennzeichnenden Merkmale des Anspruches 1.

Eine Vereinfachung ergibt sich aus dem Umstand, dass für den der Schaltkupplung zugeordneten Schaltgang der gesamte Synchronisier- und Wechselmechanismus entfällt. Bei einem mit Vorgelegewelle arbeitenden Getriebe mit direktem Durchtrieb kann z.B. der direkte Antriebsstrang mit der Schaltkupplung verbunden werden. Bei einem Getriebe ohne direkten Durchtrieb braucht es für den Schaltgang bloss eine einfache Zahnradübersetzung, wobei die Zahnräder fest mit der betreffenden Welle verbunden sein können. In jedem Fall lässt sich die Hohlwelle kurzhalten, da auf ihr nur ein Zahnrad angeordnet zu werden braucht.

Ist die Schaltkupplung in Eingriff, so wickelt sich der Fahrbetrieb in der Gangstufe des Schaltganges ab, wobei die Wechselgänge beliebig eingelegt werden können. Durch gegensinnige Betätigung der Kupplungen mittels des Schaltorgans der Ein-Aus-Steuerung wird die jeweils eingelegte Wechselgangstufe betriebswirksam; man kann also von dem Schaltgang auf jeden Wechselgang und umgekehrt sozusagen durch Knopfdruck umschalten.

Da entsprechend der Natur eines solchen Getriebes bei jedem Schalten die Kupplungen gegensinnig betätigt werden, kommt die Schaltkupplung auch beim Schalten aus einem Wechselgang in einen anderen zum Zuge, allerdings nur für die Dauer des Schaltvorganges; mit dem Einlegen des neuen Ganges wird die Einschaltdauer der Schaltkupplung beendet.

Umgekehrt kann die Schaltkupplung beliebig eingeschaltet werden und bleiben, auch dann, wenn kein anderer Wechselgang eingelegt werden soll; sodann wird von dem eingelegten Wechselgang auf den Schaltgang umgeschaltet, ohne das Getriebe selbst betätigen zu müssen.

Ist z.B. die 3. Gangstufe als Schaltgang mit der Schaltkupplung verbunden, wird letztere beim Umschalten des Getriebes vom 1. in den 2.Gang auf die Dauer des Gangwechsels eingeschaltet; die Schaltkupplung entfaltet hierbei sozusagen eine synchronisierende Funktion. Soll vom 2. in den 3.Gang geschaltet werden, so genügt die einfache Umschaltung von der Gangwechselkupplung auf die Schaltkupplung. Durch gegensinnige Umschaltung gelangt man wieder in den 2.Gang. So lässt sich -z.B. im Stadtverkehr- leicht und schnell, vor allem ohne Getriebebetätigung und ohne das herkömmliche Kuppeln zwischen 2. und 3.Gang pendeln.

Das gleiche gilt sinngemäss, wenn während der Benützung des Schaltganges anstelle des 2. der 4. oder 5.Gang eingelegt wird: Nun pendelt man durch Umschalten der Kupplungen zwischen dem 3. und 4. oder dem 5.Gang. Anders gesagt kann in jeder Schaltstellung des Getriebes durch Knopfdruck auch der 3.Gang benützt werden.

Da während der Einschaltdauer der Schaltkupplung jeder der zugeordneten Wechselgänge in beliebiger Reihenfolge eingelegt werden kann, entfällt die Notwendigkeit einer Gangvorwahl und ist die Verwendung eines herkömmlichen mechanischen Schaltgestänges mit mehreren Schaltebenen möglich. Das Schaltorgan für die Kupplungen lässt sich dann am Schalthebel unterbringen oder auch in den Schalthebel integrieren. Vorteilhafterweise ist dieses Schaltorgan in Richtung beider Schaltbewegungen des Schalthebels betätigbar, wobei jedoch bei nicht eingelegtem Gang bzw. ausgerückter Anfahrkupplung die Wirkungsverbindung des Schaltorgans gesperrt werden kann. Vorzugsweise ist dabei dem Schaltorgan eine Inversschaltung zugeordnet, so dass der Schaltsinn des Schaltorgans in gegenüberliegenden Schaltstellungen des Schalthebels jeweils gegensinnig ist. Die möglichen Schaltbewegungen des Schalthebels und des Umschaltorgans sind hierbei in jedem Gang gleichsinnig.

Diese und weitere Einzelheiten werden nachfolgend anhand der in der Zeichnung dargestellten Ausführungsbeispiele der Erfindung erläutert.

Es zeigt
- Figur 1: ein Schema eines Doppelkupplungsgetriebes mit durchgehendem Antrieb, wobei lediglich zwei mittels eines mechanischen Schaltgestänges schaltbare Wechselräderpaare und Einzelheiten der Kupplungsbetätigung dargestellt sind
- Figur 1a: eine Einzelheit aus Fig. 1 in grösserem Massstab
- Figur 2: ein hinsichtlich Schaltmechanismus und Kupplungsbetätigung gleichartiges Doppelkupplungsgetreiebe ohne durchgehenden Antrieb mit 5 Gängen und
- Figur 3: eine Ausführung mit gesonderter Anfahrkupplung.

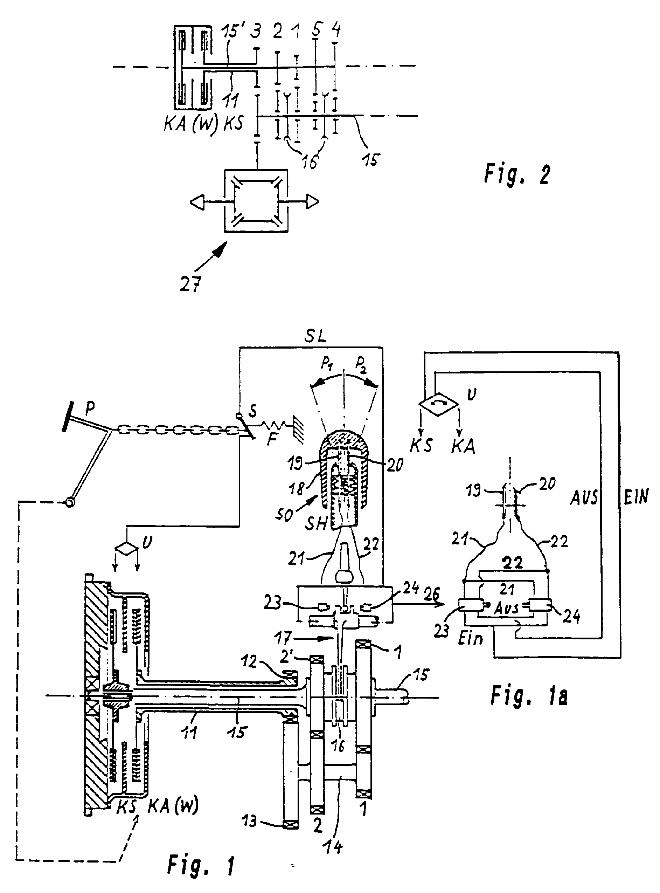

Gemäss Figur 1 treibt eine als Anfahrkupplung ausgebildete Gangwechselkupplung KA(W) über eine Hohlwelle 11 und ein Zahnradpaar 12-13 die Vorgelegewelle 14 an, deren Festräder 2,1 mit den Wechselrädern 2′,1′ kämmen, die lose drehbar an einer mit einer Schaltkupplung KS verbundenen, sich durch die Hohlwelle 11 erstreckenden durchgehenden Welle 15 sitzen. Die mit der durchgehenden Welle 15 verkeilte und zwischen den zugeordneten Wechselrädern 2′,1′ angeordnete Schaltmuffe 16 ist mit einem üblichen mechanischen Schaltgestänge 17 wohlbekannter Bauart in der üblichen Weise betätigbar, wobei die Schaltmuffe 16 die üblichen Synchronringe und Schaltklauen umschliesst bzw. trägt. Sie verbindet -wenn sie aus ihrer dargestellten Leerstellung nach der einen oder anderen Seite verschoben wird- das eine oder andere Wechselrad 2′,1′ mit der durchgehenden Welle 15, die ihrerseits mit dem nicht dargestellten Ausgleichsgetriebe verbunden ist.

Die Betätigung bzw. Steuerung der Kupplungen ist mit elekrischen Schaltsymbolen angedeutet, einzig zu dem Zweck, das Grundkonzept dieses Doppelkupplungsgetriebes zu erläutern; wie die Kupplungen, ihre Betätigung und Steuerung im einzelnen ausgebildet sind, ist völlig gleichgültig. So kann z.B. die Anfahrkupplung KA eine übliche über ein Fusspedal P betätigbare federbelastete Trockenkupplung sein. Selbstverständlich ist -wie bei solchen Getrieben üblich- eine Umsteuerung U vorgesehen, durch die die Kupplungen gleichzeitig gegensinnig betätigbar sind. Der Umsteuerung ist eine Sperre S vorgeschaltet, die bei niedergedrücktem Kupplungspedal P durch eine Zugfeder F die Steuerleitung SL der Umsteuerung U unterbricht. Hierbei handelt es sich um eine Anfahrsperre für die normalerweise offene Schaltkupplung. Diese wird durch ein Einschaltsignal einer besonderen Ein-Aus-Steuerung, die noch näher zu erläutern ist, in Eingriff gebracht. Die Umsteuerung U sorgt dabei für die gegensinnige Betätigung der Anfahrkupplung.

Als Teil der erwähnten Ein-Aus-Steuerung ist in dem Handgriff 18 des Schalthebels SH ein Schaltorgan bzw. Schalter SO integriert, durch den die Steuerleitung SL der Schaltkupplung KS bzw. die Umsteuerung aktiviert werden kann, wenn auf den Handgriff in Richtung der Pfeile P₁ bzw. P₂, d.h. der einen oder der anderen Schaltbewegung des Schalthebels Kraft ausgeübt wird. Die hierbei betätigten Kontakte 10,20 bzw. die Verbindungsleitungen 21,22 des Schaltorgans SO sind allerdings über eine mit Endschaltern 23,25 bestückte, insgesamt mit 26 bezeichnete Inversschaltung mit der Steuerleitung SL verbunden. Die Endschalter 23 und 24 werden -wie Fig.1 erkennen lässt- durch das Schaltgestänge 17 beim Einlegen des 2. bzw. 1.Ganges aus ihrem normalerweise eingenommenen Offenzustand in den Schliesszustand versetzt. Nicht dargestellt, aber vorhanden sind weitere Endschalter, die beim Einlegen des 4. bzw. 5.Ganges in gleicher Weise betätigt werden. Ist kein Gang eingelegt, so sind alle Endschalter offen und die mit dem Schalthebel als Gegenkontakt zusammenwirkenden Kontakte 19 bzw. 20 des Schaltorgans SO von der Umsteuerung U elektrisch getrennt.

Aus Figur 1a ist zu erkennen, dass die Endschalter 23 und 24 jeweils 2 Kontaktpaare aufweisen, von denen das eine mit dem Ast "AUS" und das andere mit dem Ast "EIN" der Steuerleitung SL verbunden ist. Ferner zeigt Figur 1a, dass die Kontakte 19 und 20 über ihre Verbindungsleitungen 21 bzw. 22 zugleich mit dem EIN-Kontaktpaar des einen Endschalter und dem AUS-Kontaktpaar des anderen Endschalters verbunden sind; für die den übrigen Gangstufen zugeordneten Endschalterpaare gilt natürlich das gleiche. Folglich bewirken die gleichen Kontakte 19 und 20 inverse Schaltbefehle, je nachdem, ob der Schalthebel SH sich in der einen oder anderen seiner einander gegenüberliegenden Schaltstellungen befindet, wobei die Anordnung so getroffen ist, dass der beim Einlegen eines Wechselganges geschlossene Kontakt 19 oder 20 durch den betreffenden Endschalter 23 oder 24 mit dem AUS-Ast der Steuerleitung SL verbunden wird. Dadurch kommt die Schaltkupplung KS ausser und die Gangwechselkupplung KA(W) in Eingriff und wird anstelle des Schaltganges die eingelegte Wechselgangstufe wirksam. Da aber zugleich der jeweils andere Kontakt des Schalters SO mit dem EIN-Ast der Steuerleitung SL verbunden ist, kann durch Antippen des Handgriffes 18 in der aus der Schaltstellung herausführenden Richtung von der Gangwechselkupplung auf die Schaltkupplung, von dem eingelegten Wechselgang also erneut auf den Schaltgang (oder umgekehrt) umgeschaltet werden.

Angenommen, es ist gemäss den Figuren 1, la kein Gang eingelegt: Das Antippen des Handgriffes 18 des Schalthebels SH in der einen oder anderen Schaltrichtung P₁ oder P₂ hat kein Schliessen der Schaltkupplung zur Folge. Wird jetzt -bei gedrücktem Kupplungspedal- der 1.Gang zum Anfahren eingelegt, so wird zwar der Endschalter 24 geschlossen, so dass das Antippen des Handgriffes 18 in Richtung P₂ den EIN-Ast der Steuerleitung SL aktiviert, doch ist diese durch die Sperre S unterbrochen, bis das Kupplungspedal P losgelassen wird; dann allerdings ist das Fahrzeug im 1.Gang in Bewegung. Soll jetzt der Schalthebel SH in die Schaltstellung für den 2.Gang umgelegt werden, so wird gleich der Kontakt 20 geschlossen und die Schaltkupplung SK in Eingriff gebracht; sobald aber der 2.Gang eingelegt und der Endschalter 23 geschlossen wird, geht der Schaltbefehl des Kontaktes 20 über den Endschalter 23 zum AUSAst der Steuerleitung SL, so dass die Schaltkupplung SK ausser und die Gangwechselkupplung KA(W) in Eingriff kommt. Wiederum kann man, wie im 1. oder jedem anderen Wechselgang, durch Antippen des Handgriffes 18 zwischen dem Schaltgang und dem eingelegten Gang hin und herpendeln; das Umlegen des Schalthebels ist nur erforderlich, wenn ein anderer Wechselgang eingelegt werden soll. Hierbei erfährt der Fahrbetrieb eine entscheidende Vereinfachung, indem das Schalten grundsätzlich ohne Kuppeln und unter Last erfolgen kann und das Kupplungspedal praktisch nur zum Anfahren bzw. Anhalten betätigt werden muss. Natürlich kann die Anfahr-Gangwechsel-Kupplung beliebig ausgebildet und betätigbar sein.

Gemäss Figur 2 ist bei einem Getriebe ohne direkten Durchtrieb wiederum die 3.Gangstufe mit der Schaltkupplung verbunden, während die 1. und 2.Gangstufe mit einer und die 4. und 5.Gangstufe mit einer anderen Schaltmuffe 16 mit der Abtriebswelle 15 des Getriebes verbindbar sind. Dementsprechend sitzt das Antriebszahnrad der 3.Gangstufe auf der Hohlwelle 11 und sind die Festräder der Wechselgänge mit der Welle 15′ der Anfahr-Gangwechselkupplung KA fest verbunden.

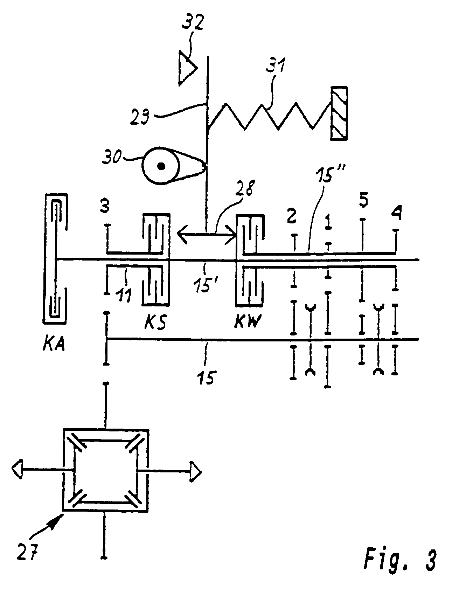

Gemäss Figur 3 ist bei einer grundsätzlich der Figur 2 entsprechenden Anordnung die Gangwechselkupplung KW nicht zugleich als Anfahrkupplung ausgebildet, sondern einerseits mit der Welle 15′ einer gesonderten, nur noch dem Anfahren dienenden Kupplung KA und andererseits natürlich (über eine Hohlwelle 15˝) mit den Festrädern der Wechselgänge verbunden. Die Schaltkupplung KS steht einerseits mit der Welle 15′ der Anfahrkupplung und andererseits -über die Hohlwelle 11- mit dem Antriebszahnrad der 3.Gangstufe in Verbindung. (In beiden Figuren ist bei 27 das Ausgleichsgetriebe mit den Halbwellen angedeutet.)

Gemäss Figur 3 befindet sich zwischen den Kupplungen KS und KW ein mit einem Doppelpfeil symbolisch dargestelltes Betätigungsglied 28, das gegen die eine oder andere Kupplung angestellt werden kann, um diese in Eingriff zu bringen. Das Betätigungsglied 28 sitzt am Ende eines Schwenkhebels 29, der ein Schwenklager 30 in Form eines Exzenters aufweist; eine Feder 31 ist bestrebt, den Schwenkhebel 29 um das Schwenklager 30 im Gegenuhrzeigersinn zu verschwenken, wobei das Betätigungsglied die Gangwechselkupplung KW in Eingriff hält, während die Schaltkupplung KS gelüftet ist. Gegenüber dem freien Ende des Schwenkhebels 29 befindet sich ein Anschlag 32, auf dem allerdings das Ende des Schwenkhebels 29 erst dann zur Anlage kommt, wenn der Exzenter 30 aus seiner dargestellten Wirklage verdreht wird. Jetzt wirkt der Anschlag 31 als Schwenklager und kehrt sich der Schwenksinn der Feder 31: Sie drückt das Betätigungsglied 28 gegen die Schaltkupplung KS. Diese kommt in Eingriff, während die Gangwechselkupplung KW gelüftet wird. Die der Anschaulichkeit halber übertriebenen Zwischenräume in diesem Betätigungsmechanismus sollen nicht darüber hinwegtäuschen, dass die ganze Anordnung praktisch spielfrei sein und mit zwei (z.B. hydraulischen) Anschlägen (bei 30 bzw. 32) betrieben werden kann, die sich wechselweise versteifen. Zudem soll illustriert werden, dass es vorteilhaft ist dafür zu sorgen, dass die Gangwechselkupplung normalerweise geschlossen ist (um z.B. den Motor durch Anschieben in Gang bringen zu können).

Die Ausführung gemäss Figur 3 gibt sich insofern als besonders vorteilhaft zu erkennen, als der die Wechselgänge umfassende Getriebeteil einerseits und die Anfahrkupplung andererseits grundsätzlich den seit Jahrzehnten üblichen Ausführungen entsprechen können. Insbesondere kann aber als Anfahrkupplung auch eine selbsttätige, z.B. hydrodynamische Ausführung vorgesehen sein. Dann jedenfalls ergibt sich eine besondere Betriebsart, wie sie sonst nur mit erheblich grösserem Aufwand mit einem hydraulischen Drehmomentwandler in Kombination mit einem von Hand schaltbaren Planetengetriebe erzielbar ist.

## Patentansprüche

1. Doppelkupplung-Gangwechselgetriebe für Kraftfahrzeuge mit zwei gleichzeitig gegensinnig gesteuerten Kupplungen, durch die die jeweils zugeordneten Gangstufen mit dem Antriebsmotor verbindbar sind, wobei das Abtriebsglied (15) des Getriebes vorzugsweise mit einer ein niedrigeres Uebersetzungsverhältnis aufweisenden, höheren Gangstufe über die eine, durch eine Ein-Aus-Steuerungsanordnung (19,20,23,24) betätigbare Kupplung verbunden ist und mit den übrigen Gangstufen über die andere Kupplung verbindbar ist, dadurch gekennzeichnet, dass die Ein-Aus-Steuerung sanordnung (19,20,23,24) ein von Hand oder Fuss betätigbares Schaltorgan (18,19,20) aufweist und die Wechselgänge mittels eines manuellen Gangwählhebels (SH) schaltbar sind, wobei vorzugsweise das Schaltorgan (18,19,20) der Ein-Aus-Steuerung sanordnung an dem in mehrere Schaltebenen versetzbaren und in denselben betätigbaren Gangwählhebel (SH) angeordnet ist und die Schaltstellungen des Schaltorgans (18,19,20) der Ein-Aus-Steuerung sanordnung (19,20,23,24) in bezug aufeinander in Richtung der Gangschaltbewegungen des Gangwählhebels (SH) versetzt sind, wobei die auf das Einlegen eines Ganges ansprechende Ausschaltanordnung (19,20,23,24) der Ein-Aus- Steuerung sanordnung (19,20,23,24) eine Inversschaltung (19-24) aufweist und bei jedem eingelegten Gang jeweils die der neutralen Stellung des Gangwählhebels (SH) näherliegende Schaltstellung die Einschaltstellung des Schaltorgans (18,19,20) ist.

2. Doppelkupplung-Gangwechselgetriebe nach Anspruch 1, dadurch gekennzeichnet, dass die Ein-Aus-Steuerung sanordnung (19,20,23,24) eine bei eingelegtem Wechselgang unwirksame Sperre (23,24) aufweist.

3. Doppelkupplung-Gangwechselgetriebe nach Anspruch 1, dadurch gekennzeichnet, dass die Ausschaltanordnung dem Schaltorgan nachgeschaltete, durch das Einlegen der Gänge betätigbare, in unbetätigtem Zustand offene Endschalter (23,24) aufweist.

4. Doppelkupplung-Gangwechselgetriebe nach einem der Ansprüche 1 bis 3, dadurch gekennzeichnet, dass die Gangwechselkupplung als normalerweise eingedrückte Anfahrkupplung (KA (W)) ausgebildet ist.

5. Doppelkupplung-Gangwechselgetriebe nach einem der Ansprüche 1 bis 4, dadurch gekennzeichnet, dass eine mit dem Antriebsteil der Schaltkupplung (KS) und der Gangwechselkupplung (KW) verbundene Anfahrkupplung (KA) vorgesehen ist (Figur 3).

6. Doppelkupplung-Gangwechselgetriebe nach Anspruch 4 oder 6, dadurch gekennzeichnet, dass die Ein-Aus-Steuerung sanordnung eine bei ausgerückter Anfahrkupplung (KA) wirksame Einschaltsperre (S) aufweist.

7. Doppelkupplung-Gangwechselgetriebe nach Anspruch 6 mit einer durch ein Fusspedal (P) betätigbaren Anfahrkupplung (KA), dadurch gekennzeichnet, dass die Einschaltsperre (S) einen bei losgelassenem Kupplungspedal (P) geschlossenen Unterbrecher (S) aufweist.

8. Doppelkupplung-Gangwechselgetriebe nach Anspruch 6 oder 8, dadurch gekennzeichnet, dass die Gangwechselkupplung (KW) normalerweise eingerückt ist.

9. Doppelkupplung-Gangwechselgetriebe nach Anspruch 8, dadurch gekennzeichnet, dass die Schaltkupplung (KS) und die Gangwechselkupplung (KW) mittels eines Schwenkhebels (29) betätigbar sind, an dem eine Schliessfeder (31) angreift, wobei die Federkraft mittels eines wegschaltbaren Schwenklagers (30) auf die Gangwechselkupplung (KW) und mittels eines anderen Schwenklagers (31) auf die Schaltkupplung übertragbar ist.

## Claims

1. A double clutch gearbox for motor vehicles, with two clutches controlled simultaneously in opposite directions, by means of which the respectively associated gear stages can be connected to the driving engine, in which arrangement the output element (15) of the gear box is preferably connected to a higher gear stage having a lower transmission ratio, by means of which a clutch actuable by an on/off control assembly (19, 20, 23, 24) can be connected to the remaining gear stages via the other clutch, characterized in that the on/off control assembly (19, 20, 23, 24) has a switching element (18, 19, 20) which can be actuated by hand or foot, and that the gears can be selected by means of a manual gear change lever (SH), in which arrangement the switching element (18, 19, 20) of the on/off control assembly is preferably arranged on the gear change lever (SH) that can be displaced into several switching planes and be actuated therein, and the switching positions of the switching element (18, 19, 20) of the on/off control assembly (19, 20, 23, 24) are offset with respect to one another in the direction of the gear change movements of the gear change lever (SH), in which arrangement the switching-off assembly (19, 20, 23, 24) of the on/off control assembly (19, 20, 23, 24) responding to the engagement of a gear has an inverse circuit (19-24), and for each gear selected, it is in each case the switching position lying closest to the neutral position of the gear change lever (SH) which is the switch-on position of the switching element (18, 19, 20).

2. A double clutch gearbox according to claim 1, characterized in that the on/off control assembly (19, 20, 23, 24) has a locking means (23, 24) which is ineffective when a gear has been engaged.

3. A double clutch gearbox according to claim 1, characterized in that the switching-off assembly has, disposed after the switching element, end switches (23, 24) which can be actuated by the engagement of the gears and are open in the non-actuated state.

4. A double clutch gearbox according to one of claims 1 to 3, characterized in that the gear change clutch is designed as a normally engaged starting clutch (KA (W)).

5. A double clutch gearbox according to one of claims 1 to 4, characterized in that provision is made for a starting clutch (KA) connected to the drive part of the selector clutch (KS) and the gear change clutch (Figure 3).

6. A double clutch gearbox according to claim 4 or 5, characterized in that the on/off control assembly has a switch-on locking means (S) which is effective when the starting clutch (KA) is disengaged.

7. A double clutch gearbox according to claim 6, with a starting clutch (KA) that can be actuated by a foot pedal (P), characterized in that the switch-on locking means (S) has an interrupter (S) which is closed when the clutch pedal (P) is released.

8. A double clutch gearbox according to claim 6 or 3, characterized in that the gear change clutch (KW) is normally engaged.

9. A double clutch gearbox according to claim 8, characterized in that the selector clutch (KS) and the gear change clutch (KW) can be actuated by means of a pivoting lever (29) whereon there is acting a closing spring (31), in which arrangement the spring force can be transmitted to the gear change clutch (KW) by means of a pivot bearing (30) that can be moved away, and to the selector clutch by means of another pivot bearing (31).

## Revendications

1. Boite de changement de vitesse à double embrayage pour véhicules à moteur, comprenant deux embrayages commandés simultanément en sens inverse qui permettent de coupler les vitesses respectivement associées avec le moteur d'entraînement, l'organe de sortie (15) de la boîte de vitesses étant couplé de préférence avec un rapport supérieur présentant un rapport de démultiplication plus faible, par l'intermédiaire de l'un des embrayages qui peut être actionné par un système de commande marche-arrêt (19, 20, 23, 24), et pouvant être couplé avec les autres vitesses par l'intermédiaire de l'autre embrayage, **caractérisée en ce** que le système de commande marche-arrêt (19, 20, 23, 24) comprend un organe de commutation (18, 19, 20) qui peut être actionné à la main ou avec le pied, que les vitesses alternatives peuvent être passées manuellement au moyen d'un levier sélecteur de vitesse (SH), l'organe de commutation du système de commande marche-arrêt (18, 19, 20) étant prévu sur le levier sélecteur de vitesse (SH) lequel peut être amené à plusieurs niveaux de commutation et actionné à ces niveaux, que les positions de commutation de l'organe de commutation (18, 19, 20) du système de commande marche-arrêt (19, 20, 23, 24) sont décalées les unes par rapport aux autres dans la direction des mouvements de changement de vitesse du levier sélecteur de vitesse (SH), le système de déconnexion (19, 20, 23, 24) du système de commande marche-arrêt (19, 20, 23, 24), qui répond à l'enclenchement d'une vitesse, comprenant un circuit d'inversion (19 à 24), et que pour chaque vitesse passée, la position de commutation plus proche de la position neutre du levier sélecteur de vitesse (SH) est la position d'enclenchement de l'organe de commutation (18, 19, 20).

2. Boîte de changement de vitesse à double embrayage selon la revendication 1, caractérisée en ce que le système de commande marche-arrêt (19, 20, 23, 24) comprend un dispositif de blocage (23, 24) qui est inactif lorsqu'une vitesse alternative est passée.

3. Boîte de changement de vitesse à double embrayage selon la revendication 1, caractérisée en ce que le dispositif de coupure comprend des interrupteurs de fin de course (23, 24) montés en aval de l'organe de commutation, qui peuvent être actionnés par l'enclenchement des vitesses, et sont ouverts à l'état non actionné.

4. Boîte de changement de vitesse à double embrayage selon l'une des revendications 1 à 3, caractérisée en ce que l'embrayage de changement de vitesse est réalisé sous la forme d'un embrayage de démarrage (KA(W)) normalement accouplé.

5. Boîte de changement de vitesse à double embrayage selon l'une des revendications 1 à 4, caractérisée en ce qu'elle comprend un embrayage de démarrage (KA) couplé avec la partie d'entraînement de l'embrayage d'accouplement (KS) et de l'embrayage de changement de vitesse (KW) (fig. 3).

6. Boîte de changement de vitesse à double embrayage selon l'une des revendications 4 ou 5, caractérisée en ce que le système de commande marche-arrêt comprend un dispositif de blocage d'enclenchement (S) qui est activé lorsque l'embrayage de démarrage (KA) est débrayé.

7. Boîte de changement de vitesse à double embrayage selon la revendication 6, avec un embrayage de démarrage (KA) qui peut être commandé par une pédale (P), caractérisée en ce que le dispositif de blocage d'enclenchement (S) comprend un rupteur (S) qui est fermé lorsque la pédale d'embrayage (P) est relâchée.

8. Boîte de changement de vitesse à double embrayage selon l'une des revendications 6 ou 3, caractérisée en ce que l'embrayage de changement de vitesse (KW) est normalement engagé.

9. Boîte de changement de vitesse à double embrayage selon la revendication 8, caractérisée en ce que l'embrayage d'accouplement (KS) et l'embrayage de changement de vitesse (KW) peuvent être actionnés au moyen d'un levier pivotant (29) sur lequel agit un ressort de fermeture (31), la force du ressort pouvant être transmise à l'embrayage de changement de vitesse (KW) au moyen d'un palier de pivotement (30) mobile, et à l'embrayage d'accouplement, au moyen d'un autre palier de pivotement (31).
